# EUROPEAN PATENT APPLICATION

(11) **EP 4 294 129 A1**
(43) Date of publication of application: **20.12.2023**
(21) Application number: 22179613.9
(22) Date of filing: 17.06.2022
(51) Int. Cl.: H05B 45/3578

(54) **LED LAMP ARRANGEMENT WITH SVM REDUCTION CIRCUIT**

(71) Applicant: Silicon Hill B.V., 1098 XG Amsterdam (NL)
(72) Inventor: ROY, Shounak, Maarssenbroek (NL)
(74) Representative: Hoyng Rokh Monegier B.V.

(57) **Abstract**

An LED lamp arrangement (100) for replacing a fluorescent lamp in a luminaire having an electronic ballast. The LED lamp arrangement (100) has a plurality of LEDs (101, 102, 103), an SVM reduction circuit (110) having an energy storage device connected across the plurality of LEDs (101, 102, 103), and a measurement and control circuit (120) adapted to measure the current drawn from the electronic ballast and generate an output to the SVM reduction circuit (110). Based on said output, the measurement and control circuit (130) is configured to activate the SVM reduction circuit (110) when the current drawn from the electronic ballast exceeds a threshold, and deactivate the SVM reduction circuit (110) when the current drawn from the electronic ballast does not exceed the threshold.

## Description

### Technical Field

The invention relates generally to light emitting diode (LED) lamps and LED lighting, and more particularly to LED lamps suitable to replace a fluorescent lamp in a luminaire.

### Background

Fluorescent lighting has been around for many years. This form of lighting started out as a highly efficient alternative for incandescent light bulbs, but has recently been surpassed by LED lighting in terms of efficiency and power consumption, and also in other aspects as set out below.

Fluorescent lamps generally comprise a tube filled with an inert gas and a small amount of mercury, capped at both ends with double pinned end caps. The end caps contain a glow wire to preheat the gasses inside the tube and to vaporize the mercury in order to assist with ignition of the fluorescent lamp. After the user turns on a main switch (e.g. a wall switch or a cord switch on the ceiling), the fluorescent lamp is ignited, and heat generated by the conducted current keeps the fluorescent lamp in operational condition. To facilitate starting of the lamp and to limit current through the lamp during operation, and thus limit the power consumed, a ballast is usually fitted in the fluorescent luminaire, connected between the mains power supply and the fluorescent lamp, and power is supplied to the lamp via the ballast.

When first introduced, the only available ballasts were simple inductive or reactive elements placed in series with the power supply to the fluorescent lamp, which limit consumed power by limiting the AC current as a result of the frequency dependent impedance of the inductor. These types of ballasts are usually referred to as magnetic ballasts.

More recently other types of ballasts have been introduced, such as electronic ballasts. These ballasts usually first convert AC mains power into DC power, and subsequently convert the DC power into high frequency AC power to drive the fluorescent lamp (e.g. 100-110Vac at a frequency in the range from 20kHz to 70kHz).

Electronic ballasts can further be categorized into two types: constant current ballasts and constant power ballasts. Most electronic ballasts are constant current ballasts, designed to deliver current at a substantially constant amplitude. These ballasts can be modelled as a constant AC current source. A constant power ballast delivers power close to the original fluorescent lamp power and the output current will vary depending on the load to try to maintain the design power output. If the load voltage is below the design level, constant power ballasts usually try to increase the output current to come closer to the designed power level.

LED lamps are more efficient than fluorescent lamps, and have many other advantages. For example, no mercury is required for LED lamps, the light output from LED lamps is more directional, power can be more easily control or regulated, and the lifetime of LEDs is generally much longer than fluorescent lamps. Thus, replacing fluorescent lamps with LED lamps is often desirable, and it is also desirable to be able to fit replacement LED lamps into existing luminaires designed for fluorescent lamps without needing to modify the luminaire. However, an LED lamp typically operates differently when used with different types of ballasts. In some cases, a straightforward replacement of a fluorescent lamp by an LED lamp in a fluorescent luminaire results in a failure of the entire luminaire.

An LED lamp arrangement compatible with all three types of ballasts mentioned above (magnetic ballasts, constant current ballast, and constant power ballast), as well as when the luminaire does not have a ballast (e.g. a luminaire which was originally designed for a fluorescent lamp, but its ballast has been removed since it is too old or damaged) is described in applicant's US Patent No. 10 342 079, herewith incorporated by reference in its entirety. This LED lamp has a switched mode power supply for driving the LEDs, a ballast protection circuit comprising an inductor, and one or more sensing circuits for generating at least one output, in dependence on whether the electrical power received from the luminaire indicates that the electrical power is generated via a magnetic ballast, a constant current ballast, a constant power ballast, or not via a ballast. The lamp further has a plurality of switches for defining a plurality of operation modes of the LED lamp in which the components of the lamp (such as the switched mode power supply and the ballast protection circuit) are connected or disconnected in different ways, and for switching among the plurality of operation modes in dependence on the at least one output of the sensing circuits, which indicate that the electrical power is generated via a magnetic ballast, a constant current ballast, a constant power ballast, or not via a ballast.

In addition to electrical issues discussed above, optical issues also arise when replacing a fluorescent lamp with an LED lamp. In fluorescent lamps, thermal inertia slows down changes in the level of light output under changing power supply conditions, so these changes are generally not so visible. In contrast, LEDs are semiconductor sources that quickly respond to changing power supply parameters. This rapid change can cause some optical issues such as flicker.

Flicker is a periodic, rapid and directly visible change in brightness of a light source, which can be due to fluctuations of the light source. Flicker can cause visual discomfort at work. It can also cause migraines and even epileptic seizures.

An LED lamp that deals with the flicker issue is described in applicant's European patent EP 3 449 694 B1, herewith incorporated by reference in its entirety. The LED lamp comprises a flicker reduction circuit and a detector for discriminating between an electronic ballast and a magnetic ballast on the basis of the voltage and/or current supplied by the ballast to the lamp, and a switch control circuit controlling a switch to only connect the flicker reduction circuit in a parallel connection to the LEDs (after a delay period after start-up of the lamp) in case the lamp is energized by a magnetic ballast, and prevent such a connection when the ballast is an electronic ballast. This is based on a realization that a capacitor in a flicker reduction circuit in an LED lamp, having a capacitor, can cause a safety mechanism in electronic ballasts to not energize the lamp. On the other hand, flicker is a problem for magnetic ballasts which operate at relatively low frequencies, but is generally not a problem for electronic ballasts since they operate at high frequencies.

Recently, another optical issue called stroboscopic effect has gained increased attention. This issue relates to a disturbance in the perception of a moving object, such as how fast the object rotates. The fluctuation in the light intensity from a light source is can be considered as a series of "snapshots" according to a certain sampling rate. Depending on the rotation speed of the object and this sampling rate, the object may appear motionless or even appear rotating in a reversed direction in some cases. This disturbance can result in a user having a wrong impression of how an object moves and/or rotates, causing accidents in some occasions.

At the end of 2021, a new EU Regulation EU 2019 / 2020 (Ecodesign) entered into force. This regulation sets out new requirements for electrical equipment including LED light sources. In addition to some new energy efficiency classes, this regulation introduces a new requirement of limiting the stroboscopic effect, represented by a parameter "Stroboscopic Effect Visibility Measure (SVM)". This parameter can be objectively measured according to the IEC TR 63158:2018 standard. The new EU regulation has put into effect a phase out plan where it requires that the SVM level be 0.9 or lower starting from September 2021 onwards, and finally aiming to be lower than 0.4 starting from September 2024.

Unlike flicker, electronic ballasts can still have high SVM despite their high frequencies. SVM could be reduced using a similar circuit in a flicker reduction circuit, e.g. using a capacitor connected across the LEDs, but as discussed above, implementing such circuit causes incompatibility with electronic ballasts.

### Summary of the Invention

It is therefore an object of the invention to provide an LED lamp that can reliably operate at low SVM while ensuring combability with electronic ballasts.

The first aspect of the invention concerns an LED lamp arrangement at least suitable for (but not limited to) replacing a fluorescent lamp in a luminaire having an electronic ballast. In an embodiment, the LED lamp arrangement comprises:
- a plurality of LEDs
- an SVM reduction circuit comprising an energy storage device (e.g. a capacitor) connected across the plurality of LEDs; and
- a measurement and control circuit adapted to measure the current drawn from the electronic ballast and generate an output (directly or via one or more other components) to the SVM reduction circuit.
In an embodiment, based on said output, the measurement and control circuit is configured to activate the SVM reduction circuit when the current drawn from the electronic ballast exceeds a threshold, and deactivate the SVM reduction circuit when the current drawn from the electronic ballast does not exceed the threshold. The SVM reduction circuit may be deactivated by default, and in this case, deactivating the SVM reduction circuit should be understood as covering the situation wherein the SVM reduction circuit remains deactivated, e.g. by not giving any output from the measurement and control circuit.

The present invention is based on an insight that not all electronic ballasts require an SVM reduction circuit, and the current drawn from the ballast can serve as an indication whether such circuit is needed. This insight is obtained based on a thorough study of the internal structure of various types of ballasts and a series of tests carried out by the inventor.

A constant current ballast typically has an active boost converter in it, which converts the mains AC voltage from the wall (e.g. 230 V) to a higher DC voltage (e.g. 400 V). This 400V DC typically has a relatively small current ripple (2%-5%) at 100Hz. This boost converter functions to achieve a relatively high power factor and low distortion in the current harmonics. After the boost converter, there is an inverter circuit, which converts the 400 V DC to high frequency (e.g. 45 kHz). This high frequency current envelope has the same 2%- 5% 100Hz ripple. The inventor has developed a theory that an LED lamp can take advantage of the active boost converter present in the constant current ballasts to achieve an inherent low SVM below 0.4, without relying on an extra SVM reduction circuit in the lamp, and has verified this theory through testing.

A constant power ballast typically does not have the boost stage. This type of ballast uses a passive circuit (called a valley-fill circuit) to achieve a relatively low power factor. This leads to a higher ripple, typically 15%-20% current ripple. After the valley-fill circuit, there is the same inverter circuit (as in constant current ballasts), which produces the high frequency, but the current envelope still contains the same 15%- 20% 100Hz ripple. This ripple results in relatively high SVM despite the high frequency of the ballast. A circuit that absorbs such ripples (e.g. using a capacitor) is therefore needed for an LED lamp when the ballast is a constant power ballast.

The inventor has also identified what causes the incompatibility with such circuit. Based on the inventor's research, it appears that this lies in an intelligent controller inside electronic ballasts. This intelligent controller monitors two parameters known as the ballast preheat frequency and the ballast preheat current. The Preheat mode frequency corresponds to the frequency of the ballast current during the start-up of the lamp. When the controller detects that this frequency deviates significant from a predefined value set in the ballast, the controller will detect a fault, thereby turning of the electronic ballast. Similarly, the intelligent controller monitors the current during start-up. If the current drawn from the ballast becomes too high, the intelligent controller detects a fault and turns itself off. Incidentally, this intelligent controller is only present in constant current ballasts, presumably for the purpose of providing ideal operating conditions for a fluorescent lamp.

Putting these together, this makes it possible to achieve a low SVM with both types of electronic ballasts by operating in two modes. This makes it possible to operate the LED lamp arrangement in a first mode when the ballast is a constant current ballast, and to operate the LED lamp arrangement in a second mode when the ballast is a constant power ballast.

In the first mode, the LED lamp arrangement can take advantage of the existing boost stage circuit present in the ballast to achieve a low SVM value without relying on an additional SVM reduction circuit in the lamp, and by not using such an additional circuit, incompatibility with the intelligent controller in the constant current ballast is avoided. In the second mode, the LED lamp arrangement cay rely on the SVM reduction circuit to reduce SVM, and since there is no intelligent controller in the constant power ballast, the SVM reduction circuit can operate without a problem. The switching between the first mode and second mode can be achieved by deactivating the SVM reduction circuit when the ballast is a constant current ballast, and activating the SVM reduction circuit when the ballast is a constant power ballast.

A constant current ballast and a constant power ballast can be distinguished based on the current drawn from the ballast. Constant current ballasts, as their name suggest, deliver a stable current, which does not substantially change whether the lamp is a fluorescent lamp or an LED. In contrast, constant power ballasts are designed to deliver a (nominally) constant amount of power to the lamp. When the fluorescent lamp is replaced by an LED lamp arrangement designed for operating at a lower power, these ballasts tend to increase the current supplied to the LED lamp arrangement to reach the designed power. Accordingly, by measuring the current drawn from the electronic ballast, a threshold can be implemented to detect whether the ballast is a constant current ballast or a constant power ballast.

In this way, a low SVM value can be achieved irrespective of whether the ballast is a constant current ballast or a constant power ballast.

In an embodiment, the SVM reduction circuit is adapted to reduce a voltage ripple across the plurality of LEDs, such that the Stroboscopic Effect Visibility Measure (SVM) level of the LED lamp arrangement during operation is 0.4 or below. This way, the LED lamp arrangement will comply with the current and future EU regulations.

For example, the energy storage device may comprise a capacitor having a capacitance in the range 68-450 µF. This embodiment has an advantage of simplicity in its design..

In an embodiment, the SVM reduction circuit further comprises a Zener diode connected across the capacitor. The Zener diode may have a Zener breakdown voltage at or below the voltage rating of the capacitor. This makes it possible to clamp the voltage across the capacitor, thereby preventing the capacitor from bursting or failing.

In an embodiment, the SVM reduction circuit comprises a switch (e.g. connected in series with the capacitor) adapted to connect the SVM reduction circuit to the plurality of LEDs when the current drawn from the electronic ballast exceeds a threshold, and disconnect the SVM reduction circuit from the plurality of LEDs when the current drawn from the electronic ballast does not exceed the threshold, based on the output of the measurement and control circuit. In this way, when the SVM reduction circuit is not needed (e.g. when the output of the measurement and control circuit indicates that the ballast is a constant current ballast), the SVM reduction circuit could simply be switched off; when the SVM reduction circuit is needed (e.g. when the output of the measurement and control circuit indicates that the ballast is a constant power ballast), the SVM reduction circuit could then be switched on. This makes it possible to use a single switch to activate / deactivate the SVM reduction circuit in accordance with the present invention.

The switch may be any type of suitable switch, for example, an electromechanical switch such as a relay, or a semiconductor switch such as a transistor, MOSFET or the like. Note that the terms "open" and "close" should also be understood to mean "turn off" and "turn on" or "disable" and "enable" respectively when referring to any of the switches described in this specification.

In an embodiment, the output of the measurement and control circuit indicates whether the ballast is a constant current ballast or a constant power ballast. For example, the output may be '0' when the ballast is a constant current ballast and ' 1' when the ballast is a constant power ballast (or the reverse). Alternatively, the output of the measurement and control circuit may represent the raw measurement value (e.g. a measured current value), and a threshold for activation/deactivation may be implemented in the SVM reduction circuit in this case. In both cases, a threshold for indicating whether the ballast is a constant current ballast or a constant power ballast may for example be set at any value in the range 400-600 mA (rms).

The measurement and control circuit can measure the current drawn from the electronic ballast in various different ways. For example, an impedance (e.g. a resistor) could be arranged in series with the LEDs. This enables the voltage across the impedance to be measured, which corresponds to the current through the LEDs, which in turn represents the current drawn from the ballast.

### Brief Description of the Drawings

The advantages of the invention will be apparent upon consideration of the following detailed disclosure of exemplary non-limiting embodiments of the invention, especially when taken in conjunction with the accompanying drawings.
Fig. 1 describes an embodiment of the LED lamp arrangement 100 according to the present invention.
Fig. 2 shows an embodiment of the LED lamp arrangement 100 in which the energy storage device 110 comprises a capacitor 110a and a switch 110b connected in series with the capacitor 110a.

### Description of Illustrative Embodiments

The following is a more detailed explanation of exemplary embodiments of the invention.

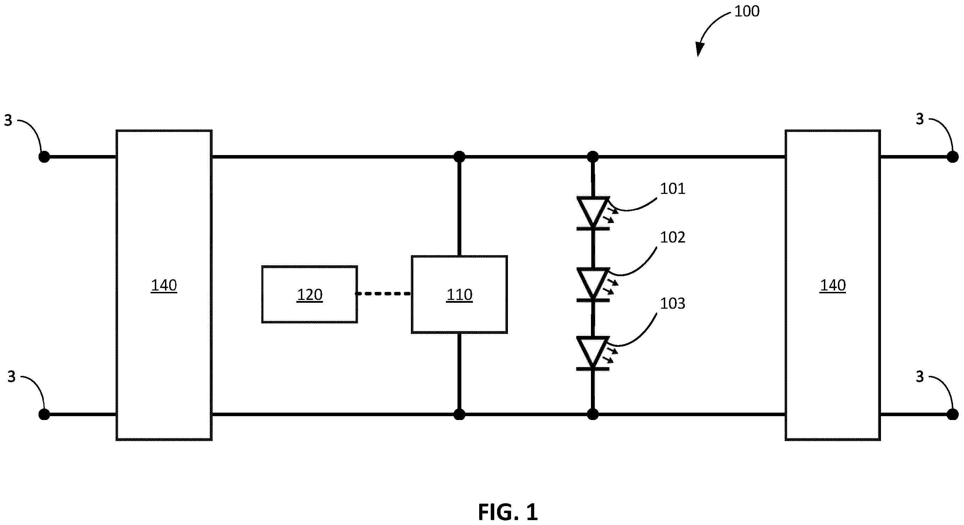

Fig. 1 describes an embodiment of the LED lamp arrangement 100 according to the present invention. The LED lamp arrangement 100 comprises a plurality of LEDs 101, 102, 103, an SVM reduction circuit 110, a measurement and control circuit 120.

The SVM reduction circuit 110 comprises an energy storage device (e.g. a capacitor) connected across the plurality of LEDs. This circuit may comprise similar components in a typical flicker reduction circuit, but the configuration may be significantly different in order to achieve a specific SVM value, e.g. 0.4 or lower.

The measurement and control circuit 120 is adapted to measure the current drawn from the electronic ballast and generate an output to the SVM reduction circuit 110. Based on this output, the measurement and control circuit 120 is configured to activate the SVM reduction circuit 120 when the current drawn from the electronic ballast exceeds a threshold, and deactivate the SVM reduction circuit when the current drawn from the electronic ballast does not exceed the threshold.

When the ballast is a constant current ballast, the measurement and control circuit 120 deactivates the SVM reduction circuit 100 using its output (e.g. by sending a deactivation signal to the SVM reduction circuit 110 or not sending any signal such that the SVM reduction circuit 100 remains in a default deactivated state), taking advantage of the existing circuit present in the ballast to achieve an inherently low SVM value. Since the SVM reduction circuit is deactivated, incompatibility with the intelligent controller in the constant current ballast is avoided.

When the ballast is a constant power ballast, the absence of an intelligent controller allows the SVM reduction circuit to be activated without causing any incompatibility issue. In this case, the measurement and control circuit 120 activates the SVM reduction circuit 110 using its output (e.g. by sending an activation signal to the SVM reduction circuit 110). The activation of the SVM reduction circuit 110 enables the desired SVM value to be achieved (e.g. 0.4 or lower). Tests conducted on more than three hundreds different ballasts known by the inventor confirm that for more than 98% of these ballasts, the LED lamp arrangement 100 can successfully turn on without the compatibility issue while operating at an SVM value below 0.4.

Note that although Fig. 1 shows three LEDs 101, 102, 103, the LED lamp arrangement 100 may comprise any number of LEDs. The LED lamp arrangement may further comprise a plurality of connector pins 3 for receiving current from the luminaire, and one or more rectifier circuits 140 for rectifying the current received from the connector pins.

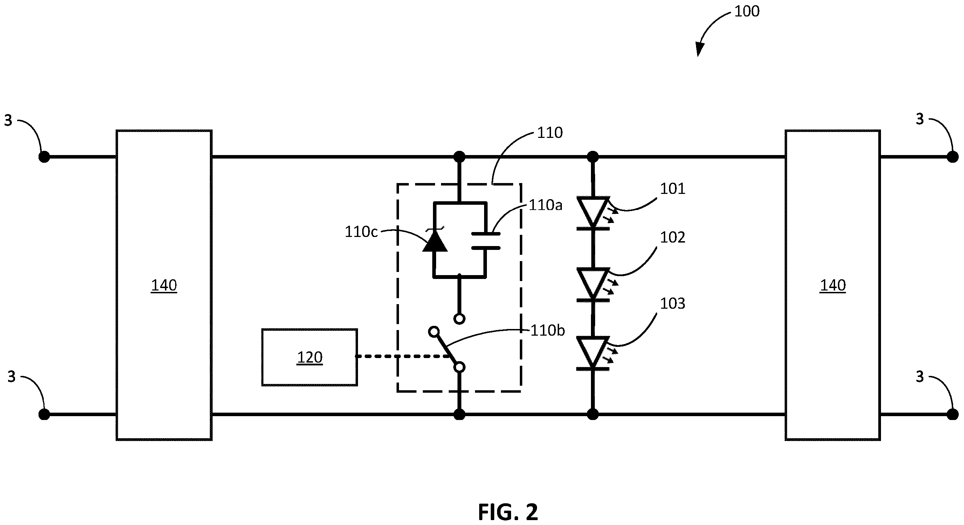

Fig. 2 shows an embodiment of the LED lamp arrangement 100 in which the energy storage device 110 comprises a capacitor 110a and a switch 110b connected in series with the capacitor 110a. The capacitor may have a capacitance in the range 68-450 µF. The LED lamp arrangement 100 may comprise one or more elements described above in connection to Fig. 1.

In this embodiment, the switch 110b is controlled by the output of the measurement and control circuit 120. In accordance with this output, the switch 120 is open when the current drawn from the electronic ballast exceeds the threshold, so as to disconnect the capacitor 110a from the LEDs 101, 102, 103, and is closed when the current drawn from the electronic ballast does not exceed a threshold, so as to connect the capacitor 110a to the LEDs 101, 102, 103. This makes it possible to switch off the SVM reduction circuit 110 when the output of the measurement and control circuit indicates that the ballast is a constant current ballast, and switch on the SVM reduction circuit when the output of the measurement and control circuit indicates that the ballast is a constant power ballast. The switch may be any type of suitable switch, for example, an electromechanical switch such as a relay, or a semiconductor switch such as a transistor, MOSFET or the like.

The SVM reduction circuit 110a may optionally further comprise a Zener diode 110c connected across the capacitor. Preferably, the Zener diode has a Zener breakdown voltage at or below the voltage rating of the capacitor. This makes it possible to clamp the voltage across the capacitor, thereby preventing it to burst or fail.

The following additional measures may be implemented in the embodiment in Fig. 1 or Fig. 2.

A threshold may be implemented in the measurement control circuit 120 to detect whether the ballast is a constant current ballast or a constant power ballast. For example, its output may be '0' when the ballast is a constant current ballast and '1' when the ballast is a constant power ballast (or the reverse). Alternatively, the measurement control circuit 120 may send an output when the ballast is a constant power ballast and send no output when the ballast is a constant current ballast, or vice versa. It is also possible to implement the threshold in the SVM reduction circuit 110, and the output of the measurement and control circuit 120 may represent a measured current value. In all these cases, the threshold may be set at any value in the range 400-600 mA (rms). It is also possible to set the threshold at another value, depending on the particular design of the LED lamp. A skilled person would understand how to set the specific value for the threshold to distinguish a constant current ballast from a constant power ballast through empirical test for a given lamp design.

The measurement and control circuit 120 can measure the current drawn from the electronic ballast in various different ways. For example, an impedance (e.g. a resistor) could be arranged in series with the LEDs. This enables the voltage across the impedance to be measured, which corresponds to the current through the LEDs, which in turn represents the current drawn from the ballast. In an exemplary embodiment, the measurement and control circuit 120 comprises an impedance or transimpedance circuit for translating the current drawn from the ballast to a first voltage level, and a comparator circuit (which may comprise an operational amplifier) adapt to compare the first voltage level with a reference voltage level to generate an output indicating whether the threshold is exceeded.

The LED lamp arrangement 100 is suitable for replacing a fluorescent lamp in a luminaire having an electronic ballast. Optionally, the LED lamp arrangement 100 may further include one or more measures described in Applicant's earlier patents and patent applications such as US Patent No. 10 342 079, European patent EP 3 449 694 B1, and PCT application WO 2020/084087, so that the LED lamp arrangement 100 is also suitable for replacing a fluorescent lamp in a luminaire having a magnetic ballast or having no ballast.

For example, the LED lamp arrangement 100 may comprise a flicker reduction circuit described in EP 3 449 694 B1 to reduce flicker and/or SVM when the ballast is a magnetic ballast or when there is no ballast. The distinguish between magnetic ballasts/no ballast on the one hand and electronic ballasts (constant current ballasts and constant power ballasts) on the other hand may be achieved by sensing frequency of power supplied to the LED lamp arrangement, or the various other mechanisms described in Applicant's US patent No. 9 441 795. These mechanisms may be implemented in the measurement and control circuit 120 or any other sensor circuit (not shown).

It will be appreciated by the skilled person that the embodiments described herein all relate to an LED lamp assembly having means to regulate the lamp power, and features described in relation to one embodiment may be used with or combined with features of the other embodiments. While the principles of the invention have been set out above in connection with specific embodiments, it is to be understood that this description is merely made by way of example and not as a limitation of the scope of protection, which is determined by the appended claims.

## Claims

1. An LED lamp arrangement (100) for replacing a fluorescent lamp in a luminaire having an electronic ballast, the LED lamp arrangement (100) comprising:
- a plurality of LEDs (101, 102, 103);
- an SVM reduction circuit (110) comprising an energy storage device (110a) connected across the plurality of LEDs (101, 102, 103); and
- a measurement and control circuit (120) adapted to measure the current drawn from the electronic ballast and generate an output to the SVM reduction circuit (110);
wherein, based on said output, the measurement and control circuit (130) is configured to activate the SVM reduction circuit (110) when the current drawn from the electronic ballast exceeds a threshold, and deactivate the SVM reduction circuit (110) when the current drawn from the electronic ballast does not exceed the threshold.

2. The LED lamp arrangement (100) according to claim 1, wherein the SVM reduction circuit (110) is adapted to reduce a voltage ripple across the plurality of LEDs (101, 102, 103), such that the Stroboscopic Effect Visibility Measure (SVM) level of the LED lamp arrangement (100) during operation is 0.4 or below.

3. The LED lamp arrangement (100) according to claim 1 or 2, wherein the energy storage device comprises a capacitor having a capacitance in the range 68-450 µF.

4. The LED lamp arrangement (100) according to claim 3, wherein the SVM reduction circuit further comprises a Zener diode (110c) connected across the capacitor, wherein the Zener diode has a Zener breakdown voltage at or below the voltage rating of the capacitor.

5. The LED lamp arrangement (100) according to any of the preceding claims, wherein the SVM reduction circuit (110) comprises a switch (110b) adapted to connect the SVM reduction circuit (110) to the plurality of LEDs when the current drawn from the electronic ballast exceeds a threshold, and disconnect the SVM reduction circuit (110) from the plurality of LEDs when the current drawn from the electronic ballast does not exceed the threshold, based on the output of the measurement and control circuit (120).

6. The LED lamp arrangement (100) according to claim 5, wherein the switch (110b) comprises a semiconductor switch.

7. The LED lamp arrangement (100) according to any of the preceding claims, wherein the output of the measurement and control circuit (120) indicates whether the ballast is a constant current electronic ballast or a constant power electronic ballast.
